# EUROPÄISCHE PATENTSCHRIFT

(11) **EP 3 592 668 B1**
(45) Veröffentlichungstag und Bekanntmachung des Hinweises auf die Patenterteilung: **30.08.2023**
(21) Anmeldenummer: 18700162.3
(22) Anmeldetag: 10.01.2018
(51) Int. Cl.: B65G 1/137, B65G 47/38, B65G 47/61

(54) **VERFAHREN ZUM KOMMISSIONIEREN VON WAREN UND KOMMISSIONIERUNGSANLAGE ZUR DURCHFÜHRUNG DES VERFAHRENS**
METHOD FOR ORDER-PICKING GOODS AND ORDER-PICKING SYSTEM FOR CARRYING OUT THE METHOD
PROCÉDÉ DE PRÉPARATION DE COMMANDES D'ARTICLES ET DISPOSITIF DE PRÉPARATION DE COMMANDES POUR LA MISE EN OEUVRE DE CE PROCÉDÉ

(30) Priorität: 07.03.2017 CH 2772017
(43) Veröffentlichungstag der Anmeldung: 15.01.2020
(73) Patentinhaber: FERAG AG, 8340 Hinwil (CH)
(72) Erfinder: SUTTER, Stefan, 8634 Hombrechtikon (CH)
(74) Vertreter: Rentsch Partner AG
(86) Internationale Anmeldenummer: PCT/EP2018/050579
(87) Internationale Veröffentlichungsnummer: WO 2018/162123

(56) Entgegenhaltungen:
- EP-A1- 2 581 329
- EP-A1- 2 714 552
- WO-A1-2015/124524
- WO-A1-2017/027897
- DE-A1-102012 018 925
- JP-A- H07 304 514
- JP-A- 2001 253 515
- JP-A- 2001 261 127
- JP-A- 2002 249 209

## Beschreibung

### TECHNISCHES GEBIET

Die vorliegende Erfindung bezieht sich auf das Gebiet der Verteilung von Waren bzw. Artikeln. Sie betrifft ein Verfahren zum Kommissionieren von Waren gemäss dem Oberbegriff des Anspruchs 1. Sie betrifft weiterhin eine Kommissionierungsanlage zur Durchführung des Verfahrens.

### STAND DER TECHNIK

Im Zuge der zunehmenden Warenströme und der sich ändernden Art der Warenverteilung und -versorgung nehmen Probleme und Lösungen der Logistik einen immer breiteren Raum ein. Die in grossen Lagern, insbesondere auch Hochregallagern eingelagerten und vorgehaltenen Waren sollen möglich zeitnah zum Auftrag ausgespeichert, zu Warensendungen zusammengestellt und ausgeliefert werden. Ein wichtiger Teilbereich dieses Warenumschlags ist die Kommissionierung, d.h. das Zusammenstellen von bestimmten Teilmengen (Artikeln) aus einer bereitgestellten Gesamtmenge (Sortiment) aufgrund von Aufträgen. Dabei kann es sich um einen Kundenauftrag oder auch um einen Produktionsauftrag handeln.

Im Stand der Technik gibt es eine Vielzahl von Lösungsvorschlägen zu Problemen der Kommissionierung.

Die Druckschrift EP1 799594B1 beschreibt ein Verfahren zur Kommissionierung von Kundenaufträgen zur Bereitstellung von Produkten in gewünschter Stückzahl, welches die folgenden Schritte umfasst: das Zuordnen eines jeden Kundenauftrags zu zumindest einem Auftragsspeicherbehälter, das Holen der im Kundenauftrag angegebenen Produkte in der vorgegebenen Anzahl aus einem Hauptspeicher und Einsortieren der geholten Produkte in den zumindest einen dem Kundenauftrag zugeordneten Auftragsspeicherbehälter, und - für jeden Kundenauftrag - das Übergeben der im zumindest einen dem Kundenauftrag zugeordneten Auftragsspeicherbehälter zwischengespeicherten Produkte an einen Sammelförderer zu einem für den Kundenauftrag festgelegten Zeitpunkt. Zum Holen der Produkte aus dem Hauptspeicher werden Holaufträgefür Kommissionierer erstellt, wobei ein Holauftrag die zu holenden Produkte und deren Anzahl umfasst, wobei die Produkte von mehreren Kundenaufträgen zusammenfassbar sind, die gemeinsam aus dem Hauptspeicher geholt und anschließend gemäß den Kundenaufträgen in die zugeordneten Auftragsspeicherbehälter einsortiert werden.

Die Druckschrift DE21 2014000008U1 offenbart eine Kommissionieranlage mit einem Steuerrechner zum Kommissionieren von Produkten für einen Kommissionierauftrag, wobei die Kommissionieranlage zumindest eine Regaleinheit mit zwei Regalen zum Lagern von Produkten und einem in einer durch die zwei Regale gebildeten Regalgasse vorgesehenen Transportsystem zum Ein- und Auslagern der Produkte aufweist und wobei aus den Regalen ausgelagerte Produkte an einen Zwischenlagerplatz abgebbar sind und wobei eine Fördertechnik zum Fördern der Produkte vorgesehen ist. Zumindest zwei Pufferschalen sind als Zwischenlagerplatz vorgesehen und der Steuerrechner ist zum Kommissionieren von Teilkommissionieraufträgen der in den Regalen einer Regaleinheit enthaltenen Produkte eines Kommissionierauftrags in jeweils eine der Pufferschalen ausgebildet, und der Steuerrechner ist zum Zusammenführen der Teilkommissionieraufträge eines Kommissionierauftrags auf der Fördertechnik ausgebildet.

Die Druckschrift WO201 3053747A1 offenbart ein Kommissioniersystem mit einem Artikellager, einer Lagerladehilfsmittel-Fördertechnik, einer Ladungsträger-Fördertechnik, einer Pick-Station, die mit dem Artikellager verbunden ist und die an die Ladungsträger-Fördertechnik gekoppelt ist, wobei die Pick-Station eine erste Überwachungseinrichtung und eine zweite Überwachungseinrichtung aufweist, wobei die erste Überwachungseinrichtung so angeordnet ist, dass eine manuelle Entnahme eines Artikels aus einem Lagerladehilfsmitteln erfassbar ist, und wobei die zweite Überwachungseinrichtung so angeordnet ist, dass eine manuelle Abgabe des entnommen Artikels in genau einen der Ladungsträger erfassbar ist, wobei die Entnahmeposition und die Abgabeposition innerhalb eines Arbeitsbereichs der Pick-Station angeordnet sind; und einer Steuereinrichtung, die angepasst ist, Lagerladehilfsmittel zwecks Batch-Picking zur Pick-Station zu transportieren und eine Anzahl von Artikelentnahmen mitzuverfolgen, um einen Lagerladehilfsmittelaustausch an der Entnahmeposition zu bewirken, wenn eine durch das Batch-Picking vorbestimmte Anzahl von Artikel entnommen wurde, und um jeweils einen Ladungsträgeraustausch an der Abgabeposition zu bewirken, wenn die Abgabe des entnommenen Artikels in den bereitgestellten Ladungsträger erfasst wurde. Die Ladungsträger-Fördertechnik kann ein Hängefördersystem und die Ladungsträger können Taschen sein.

Die Druckschrift EP2789555B1 offenbart eine Vorrichtung zum auftragsorientierten Bereitstellen von Einzelwaren für mehrere Aufträge aus einem Warenlager, welche mindestens einen mit einem Warenlager verbundenen Zwischenspeicher zum Zwischenspeichern von Einzelwaren mindestens eines Auftrags umfasst, sowie jeweils einen mit dem mindestens einen Zwischenspeicher verbundenen Sammelbereich zum Sammeln der Einzelwaren des mindestens einen komplettierten Auftrags und mehrere Abgabelinien aufweisenden Trennbereich zum auftragsorientierten Bereitstellen der Einzelwaren des mindestens einen komplettierten Auftrags.

Die Druckschrift WO2013/029192A1 offenbart ein Verfahren zum Bereitstellen von Gruppen von Produkten mittels einer Förderanlage, wobei die Produkte in mehreren, unterschiedlichen Typen sowie in mehreren unterschiedlichen Varianten vorliegen und wobei eine Gruppe von Produkten mehrere Produkte aufweist, und welches die folgenden Schritte aufweist: - Beschicken eines Eingabeabschnitts der Anlage mit Eingabe-Gruppen, wobei eine Eingabe-Gruppe mehrere Produkte gleichen Typs umfasst; - Empfangen einer Mehrzahl von maschinenlesbaren Ausgabe-Gruppen-Anforderungen, wobei eine Ausgabe-Gruppen-Anforderung eine Zusammensetzung einer Ausgabe-Gruppe durch Angabe von Typ und Variante für eine Mehrzahl von Produkten spezifiziert, wobei die Produkte vorzugsweise alle von derselben Variante sind; - Fördern der Produkte vom Eingabeabschnitt in einen Übergabeabschnitt der Anlage; - Fördern der Produkte vom Übergabeabschnitt in einen Ausgabeabschnitt der Anlage; - wobei nach dem Fördern der Produkte in den Übergabeabschnitt und in den Ausgabeabschnitt im Ausgabeabschnitt Ausgabe-Gruppen der Produkte nach Massgabe der Ausgabe-Gruppen-Anforderungen vorliegen; - Ausgabe der Ausgabe-Gruppen aus dem Ausgabeabschnitt.

Die Druckschrift WO2015124524A1 beschreibt eine Hängefördereinrichtung zum Transport von Fördergut in Hängetaschen, umfassend, eine Mehrzahl von Hängetaschen, jeweils mit einer ersten Taschenseitenwand und einer zweiten Taschenseitenwand, die in einem Klappverbindungsbereich so miteinander verbunden sind, dass sie zum Öffnen und Schließen eines Fördergutaufnahmebereiches auseinanderklappbar und zusammenklappbar sind, und mit einem Anhängmittel zum Anhängen der Hängetasche an der Hängefördereinrichtung, wobei die erste Taschenseitenwand schwenkbeweglich um eine in einer Transportstellung der Hängetasche zumindest annähernd horizontal verlaufende Taschen-Schwenkachse mit dem Anhängmittel verbunden ist, und die zweite Taschenseitenwand derart mit dem Anhängmittel verbunden oder davon beaufschlagbar ist, dass durch Schwenken der ersten Taschenseitenwand um die Taschen-Schwenkachse die Taschenseitenwände auseinanderklappbar und zusammenklappbar sind, wobei die Hängefördereinrichtung weiter umfasst: eine Führungsschienenanordnung zum geführten Bewegen der Hängetaschen in ihrer Transportstellung, und eine Ladestation für die Hängetaschen, mit eine Ladeplattform, die unterhalb der Führungsschienenanordnung positioniert ist. Die Ladeplattform ist relativ zu der Führungsschienenanordnung in vertikaler Richtung verstellbar, vorzugsweise automatisch verfahrbar.

Vorgeschlagen wird dort ein Sortier-Vorgang, bei dem die Hängetaschen zunächst Artikel der gleichen Art transportieren und dann an den Entladestationen entleert werden, von wo aus die Artikel in Karton-Fördertechnik sortenrein den Beladestationen zugeführt werden, von denen aus die nun leeren Hängetaschen mit einer jeweils gewünschten Artikelkombination, auch in Kombination mit weiteren Artikeln befüllt werden können. Die einzelnen Hängetaschen können dabei anhand von an diesen angebrachten, automatisch auslesbaren Kennungen eindeutig identifiziert werden.

Die Druckschrift WO201 6066578A1 offenbart ein Verfahren sowie ein Lager- und Kommissioniersystem zum progressiven Kommissionieren gemäss Neuaufträgen, wobei das System aufweist: ein Kommissionierlager, in welchem unterschiedliche Artikeltypen gelagert sind, wobei das Lager eine Kapazität aufweist, die eine Kommissionierreichweite von vielen Tagen gewährleistet; eine Kommissionierstation für Artikel, die im Lager gelagert sind; ein Pufferlager, in welchem ausgewählte Artikeltypen gelagert sind und das eine Kapazität aufweist, die eine Reichweite von wenigen Tagen gewährleistet, wobei ein Befüllungsauftrag zyklisch neu basierend auf Daten von Altaufträgen bestimmt wird, wobei die Altaufträge bestellte Artikeltypen einschließlich Stückzahlen sowie Bestellzeitpunkte angeben; eine Kommissioniersteuerung; und mindestens eine Arbeitsstation und eine Konsolidierungspuffer-Einrichtung; wobei die Kommissioniersteuerung zur zyklischen Erzeugung des Befüllungsauftrags eingerichtet ist, wobei die Erzeugung die folgenden Schritte aufweist: Auswählen der Artikeltypen, die in der Vergangenheit häufig und in größeren Mengen bestellt wurden, für das Pufferlager aus den Daten der Altaufträge; Bestimmen von Pufferstückzahlen für jeden der ausgewählten Artikeltypen; und Erzeugen des Befüllungsauftrags, der die Artikeltypen mit ihren Pufferstückzahlen definiert.

Die Druckschrift WO2016197176A1 offenbart ein Verfahren zum Kommissionieren von Waren in einer Kommissionierzone, umfassend die Schritte - Bereitstellen von Waren, Bereitstellen zumindest eines Sacks und eines kistenförmigen Ladehilfsmittels, Einbringen des zumindest einen Sacks in das kistenförmige Ladehilfsmittel, - Einfüllen der Waren in den zumindest einen Sack in der Kommissionierzone und Abtransport des kistenförmigen Ladehilfsmittels mit dem befüllten Sack aus der Kommissionierzone, wobei vor dem Einfüllen der Waren in den zumindest einen Sack eine Kommissionierhilfe in den zumindest einen Sack eingeführt wird.

Alle bekannten Verfahren und Vorrichtungen zur Kommissionierung von Waren sind vergleichsweise aufwändig, unflexibel und nur mit Aufwand an unterschiedliche Bedingungen anpassbar. JP2001261127A offenbart ein Verfahren gemäß dem Oberbegriff des Anspruchs 1 sowie eine Kommissionierungsanlage gemäß dem Oberbegriff des Anspruchs 12.

### DARSTELLUNG DER ERFINDUNG

Es ist daher eine Aufgabe der Erfindung, ein Verfahren zur Kommissionierung und eine Kommissionieranlage zur Durchführung des Verfahrens anzugeben, welche die Nachteile bekannter Verfahren und Anlagen vermeidet, einfach aufgebaut ist, sich leicht erweitern oder anderweitig anpassen lässt und flexibel betrieben werden kann.

Die Aufgabe wird durch die Merkmale der Ansprüche 1 und 12 gelöst. Das erfindungsgemässe Verfahren zum Kommissionieren von Waren, bei welchem Verfahren die einzelnen Waren aus einer Warenansammlung herausgenommen, gemäss Vorgaben zu Warengruppen zusammengestellt und in Form dieser Warengruppen zur weiteren Verarbeitung ausgegeben werden, ist dadurch gekennzeichnet, dass die Zusammenstellung der Waren zu Warengruppen in an einem Hängeförderer hängende Taschen hinein erfolgt.

Die Warenansammlung kann dabei geordnet sein, indem z.B. die Waren nach ihrer Art sortiert auf Paletten oder in einem Regal oder Hochregallager bereitgehalten werden. Die Warenansammlung kann aber auch ungeordnet sein, indem die Waren lose in einem Behälter oder in einem aufgeschütteten Haufen vorliegen, was vor allem bei kompakten, kleinen Artikeln der Fall sein kann.

Insbesondere kann dabei jeder Warengruppe wenigstens eine eigene Tasche zugeordnet werden. Wenn die Waren einer kommissionierten Warengruppe in eine einzelne Tasche hineinpassen, können sie in eine einzelne Tasche hinein zusammengestellt werden. Es ist aber auch denkbar, insbesondere wenn die Warengruppe für eine einzelne Tasche zu gross ist, diese Warengruppe auf mehrere zugeordnete Taschen aufzuteilen, die dann entsprechend ihrer Zuordnung zu der kommissionierten Warengruppe als zueinander gehörig gekennzeichnet oder erkennbar sein sollten. Dies kann durch Anordnung in einer unmittelbar aufeinanderfolgenden Reihenfolge oder durch das Anbringen entsprechender (auslesbarer) Informationen an den Taschen erfolgen. Die Zuordnung von Waren der Warengruppe und Taschen kann durch eine entsprechend ausgelegte Steuerung automatisch erfolgen.

In der Regel umfasst eine kommissionierte Warengruppe eine Mehrzahl von einzelnen Waren, die meist unterschiedlich sind, aber zum Teil oder insgesamt auch gleichartig sein können. Im Extremfall kann die Warengruppe aus einer einzigen Ware bzw. einem einzigen Artikel bestehen.

Weiterhin wird vorzugsweise in mindestens eine Tasche eine aus mehreren Waren, insbes. aus mehrere unterschiedliche Waren bestehende Warengruppe eingefüllt.

Gemäss einer Ausgestaltung des erfindungsgemässen Verfahrens können die Warengruppen jeweils in einem einzigen Befüllvorgang in die dafür vorgesehenen Taschen eingefüllt werden. Die durch Kommissionierung zusammengestellter Warengruppe wird dabei bereitgehalten und in die dafür bestimmte Tasche eingefüllt.

Gemäss einer anderen Ausgestaltung des erfindungsgemässen Verfahrens können die zu einer Warengruppe gehörenden Waren bzw. Artikel unter Bildung der Warengruppe in mehreren nacheinander ausgeführten Befüllvorgängen in die dafür vorgesehene(n) Tasche(n) eingefüllt werden. Die Befüllvorgänge können sich dabei auf einzelne Waren oder Artikel beziehen, aber auch auf beliebige andere Teilmengen der kommissionierten Warengruppe. Wenn beispielsweise die Warengruppe aus fünf Artikeln besteht, können in einem Befüllvorgang drei der fünf Artikel und in einem weiteren Befüllvorgang die restlichen zwei Artikel eingefüllt werden. Dieses Vorgehen bietet sich naturgemäss auch an, wenn die Warengruppe ihrer Grösse wegen auf mehrere Taschen aufgeteilt werden muss.

Insbesondere kann für jede einzelne Ware ein eigener Befüllvorgang durchgeführt wird.

Zum sukzessiven Befüllen kann die Tasche nacheinander an verschiedenen Einfüllvorrichtungen vorbeigeführt werden. In jeder dieser Einfüllvorrichtungen können dann einzelne Artikel der Warengruppe oder auch Teilmengen der Warengruppe eingefüllt werden. Nach dem Passieren der mehreren Einfüllvorrichtungen ist die Tasche dann bereit, die kommissionierte Warengruppe an einer Warenausgabe wieder abzugeben.

Zum sukzessiven Befüllen kann die Tasche aber auch mehrmals an derselben Einfüllvorrichtung vorbeigeführt werden. Die Einfüllvorrichtung stellt in diesem Fall die zur Warengruppe gehörenden Waren oder Artikel oder Teilmengen nacheinander bereit. Machen mehrere Taschen einen solchen Umlauf an derselben Einfüllvorrichtung vorbei, muss die Einfüllvorrichtung die bereitgehaltenen Waren bzw. Artikel den jeweils den gerade ankommenden Taschen zuordnen. Alle diese Vorgänge können durch eine gemeinsame Steuerung automatisch durchgeführt werden.

Insbesondere kann die Warengruppe eine einzelne Ware mehrfach enthalten. Es sind dann Teilmengen gleicher Waren oder Artikel in der Warengruppe vorhanden. Im Sonderfall können alle Waren der Warengruppe gleich sein.

Gemäss einer anderen Ausgestaltung des erfindungsgemässen Verfahrens können die Taschen nach dem Befüllen mit der vorgesehenen Warengruppe zunächst zwischengelagert werden, bevor die darin enthaltenen Warengruppen zur weiteren Verarbeitung ausgegeben werden. Durch die Zwischenlagerung der befüllten Taschen wird eine Speicherfunktion verwirklicht, die zum Ausgleich zwischen unterschiedlichen Geschwindigkeiten bei Kommissionierung und Warenausgabe dienen kann. So ist es denkbar, über Nacht Kommissionierungen ohne Warenausgabe durchzuführen, die dann am nächsten oder einem späteren Tag zur Weiterverarbeitung frei gegeben werden.

Die Zwischenlagerung hat sich auch für teilweise befüllte Taschen als vorteilhaft erwiesen, bei denen die Befüllung mit unterschiedlichen Gütern nicht unmittelbar nacheinander erfolgen kann, da zum Beispiel eine oder mehrere Waren aus der vorgesehenen Warengruppe noch nicht zur Verfügung stehen.

Insbesondere können die befüllten und/ oder die teilweise befüllten Taschen in einem Umlaufspeicher zwischengelagert werden, in welchem sie jeweils in einem geschlossenen Kreislauf zirkulieren. Durch den Umlauf werden die Zugriffszeiten auf eine bestimmte mit einer kommissionierten Warengruppe befüllte Tasche verringert.

Der Zugriff lässt sich weiter verbessern, wenn die befüllten Taschen in dem Umlaufspeicher je nach Inhalt auf verschiedene Speichereinheiten aufgeteilt werden. Hierdurch kann eine Sortierfunktion verwirklicht werden, die Warengruppen nach ihrer Art an unterschiedlichen Plätzen speichert und so den Zugriff nicht nur nach dem Inhalt, sondern auch nach dem Speicherort erlaubt.

Ist mehr als eine Tasche für eine Warengruppe nötig, so hat es sich als vorteilhaft erwiesen die Anlage derartig zu steuern, dass Taschengruppe, die die Warengruppe enthält, räumlich direkt aufeinanderfolgend transportiert, allenfalls gespeichert und der Entleerungsvorrichtung zugeführt wird.

Die erfindungsgemässe Kommissionierungsanlage zur Durchführung des Verfahrens nach der Erfindung ist dadurch gekennzeichnet, dass die Kommissionierungsanlage eingangsseitig eine Warenansammlung für die zu kommissionierenden Waren mit wenigstens einer daran anschliessenden Einfüllvorrichtung für die Taschen, sowie ausgangsseitig eine Entleerungsvorrichtung für die mit den Warengruppen befüllten Taschen aufweist, und dass zwischen der wenigstens einen Einfüllvorrichtung und der Entleerungsvorrichtung ein Hängeförderer für die Taschen angeordnet ist, welcher die wenigstens eine Einfüllvorrichtung mit der Entleerungsvorrichtung verbindet.

Die Taschen werden im leeren, im teilbefüllten oder im befüllten Zustand hängend zwischen den Stationen transportiert und in den Stationen am Hängeförderer hängend befüllt oder geleert. Dies kann insbesondere bei laufendem Hängeförderer ohne Stillstandszeiten erfolgen.

Gemäss einer Ausgestaltung der Erfindung verbindet der Hängeförderer die wenigstens eine Einfüllvorrichtung mit der Entleerungsvorrichtung in einem geschlossenen Umlauf. In diesem geschlossenen Umlauf zirkulieren die Taschen zwischen den einzelnen Stationen.

Dabei kann der Hängeförderer an mehreren hintereinander angeordneten Einfüllvorrichtungen vorbeigeführt sein. An diesen hintereinander angeordneten Einfüllvorrichtungen kann eine einzelne Taschen mehrfach befüllt werden. Es ist aber auch denkbar, dass unterschiedliche Taschen an unterschiedlichen Einfüllvorrichtungen gewissermassen parallel befüllt werden, um den Durchsatz zu erhöhen.

Der Hängeförderer kann aber auch einen weiteren geschlossenen Umlauf aufweisen, auf welchem teilbefüllte Taschen wieder zu der wenigstens einen Einfüllvorrichtung zurückgeführt werden, ohne in der Entleerungsvorrichtung entleert zu werden. Hierdurch können mit einem Minimum an Einfüllvorrichtungen auch komplexere Kommissionierungsaufgaben gelöst werden.

Gemäss einer Ausgestaltung der Erfindung ist für die Steuerung von Einfüllvorrichtung, Entleerungsvorrichtung und Hängeförderer eine gemeinsame Steuerung vorgesehen.

Die gemeinsame Steuerung ist insbesondere für die Zuordnung der Waren einer Warengruppe zu einzelnen Taschen ausgelegt. Diese Zuordnung und daraus folgende Befüllung werden von der gemeinsamen Steuerung automatisch vorgenommen. Desgleichen steuert die gemeinsame Steuerung die Entleerung der Taschen zur planmässigen Weiterverarbeitung der kommissionierten Warengruppen. Die gemeinsame Steuerung sorgt auch dafür, dass der Kreislauf der Teilfüllung mit den übrigen Prozessen störungsfrei abgestimmt wird, insbesondere die vollständige Entleerung der Taschen.

Nach der vollständigen Entleerung der Taschen, die vorzugsweise in einem Schritt an einer Station erfolgt, stehen die Taschen wieder zur Befüllung zur Verfügung.

Darüber hinaus kann die gemeinsame Steuerung zur Übermittlung von Kommissionierungsdaten, insbesondere Daten der Warengruppen, an ein ERP-System angeschlossen sein. Ein solches ERP-System, dem generell die Aufgabe des Enterprise-Resource-Planning (ERP) zukommt, sorgt dafür, dass nach Art einer Materialbedarfsplanung sichergestellt ist, dass alle für die Kommissionierung erforderlichen Waren an der richtigen Stelle, zur richtigen Zeit und in der richtigen Menge zur Verfügung stehen. Dies umfasst insbesondere das Vorbereiten der Waren in der Warenansammlung, das Auslagern der Waren aus der Warenansammlung (z.B. Hochregallager), die Überwachung und Lenkung der Steuerung sowie die Übermittlung von Daten an eine Warenausgabe, die - wenn es um einen Warenversand geht - Versanddaten wie Adresse, Gewicht, Porto, Kartongrösse etc. beinhalten kann.

Die gemeinsame Steuerung und das ERP-System bilden eine Konfiguration, die sich durch folgende Charakteristiken und Eigenschaften auszeichnet:
- Die gemeinsame Steuerung besitzt eine Schnittstelle zum ERP-System mit IT-Infrastruktur/PC.
- Eingeschlossen ist des Weiteren ein Lagerverwaltungssystem und ein Materialfluss-Kontroller) für das Lagerverwaltungssystem.
- Ebenfalls eingeschlossen ist eine Koordinationssteuerung für mehrere umlaufende Hängeförderer.
- Es gibt eine Datenbankankopplung.
- Es gibt weiterhin einen Webserver zur Auftragsverfolgung.
- Zur Benutzerfreigabe ist ein Logging-Modul vorgesehen.
- Optional kann mit einem Backup-PC eine Hochverfügbarkeit erreicht werden.
- Mehrere Artikel können einem Auftrag/einer Tasche zugeordnet werden.
- Abgabe der kompletten Aufträge an der Abgabestation.
- Alle mechanischen Teile der Anlage wie Antriebe, Weichen, Stopper werden gesteuert.
- Sensoren zur Erfassung der Taschen und Laufwagen zur Bahnverfolgung der Warengruppen sind vorhanden.
- Für die absolvierten Aufträge werden Bestätigungen ausgegeben.

Der Hängeförderer kann als Umlaufspeicher ausgebildet sein, in welchem befüllte und/oder teilbefüllte und/oder leere Taschen zwischengelagert werden können. Hierdurch lässt sich der Betrieb der Anlage weiter flexibilisieren und der Ablauf der Kommissionierung insgesamt beschleunigen. Auch kann durch die Zwischenlagerung der Betrieb an sich in kurzer Zeit ändernde Anforderungen wie vorgezogene oder verzögerte Lieferungen von Warengruppen schnell angepasst werden.

Insbesondere kann der Umlaufspeicher eine Mehrzahl von nacheinander einzeln anfahrbaren Speichereinheiten aufweist, in welchen jeweils befüllte und/oder teilbefüllte Taschen und/oder leere Taschen in einem separaten Umlauf zirkulieren. Durch die örtliche Aufteilung in einzelne Speichereinheiten wird die Flexibilität zusätzlich erhöht. So ist es beispielsweise denkbar einzelnen Speichereinheiten einzelne Liefertermine bzw. -tage zuzuordnen und so zeitlich zusammengehörende Lieferungen auch örtlich zusammenzufassen und vorzuhalten.

Gemäss einer anderen Ausgestaltung der Erfindung umfasst die Kommissionierungsanlage wenigstens eine Einfüllvorrichtung, welche sich synchron mit dem darunter vorbeigeführten Hängeförderer bewegt und aus mitbewegten Einfüllfächern Waren in die darunter vorbeibewegten Taschen einfüllt. Die Bewegung kann dabei linear oder auch rotierend sein. Hierdurch lässt sich ein gleichmässiger Betrieb der Anlage besonders einfach verwirklichen. Gemäss einer weiteren Ausgestaltung der Erfindung umfasst die Entleerungsvorrichtung eine Abnahmevorrichtung, welche die befüllten, am Hängeförderer hängenden Taschen in eine Entleerungsstellung verschwenkt und gleichzeitig die in der Entleerungsstellung aus den Taschen herauskommenden Waren aufnimmt und weiterbefördert. In bevorzugten Ausführungsformen werden die Taschen vollständig, vorzugsweise in einem Schritt entleert.

Insbesondere kann die Abnahmevorrichtung ein umlaufendes Abnahmeband umfassen, welches über eine vorbestimmte Strecke parallel zum Hängeförderer geführt ist, auf welcher Strecke ein Übergabebereich für die in den Taschen befindlichen Waren liegt.

Die Kommissionierungsanlage umfasst nicht nur Taschen, sondern es kommen ausschliesslich oder in Kombination mit den Taschen Körbe zur Zusammenstellung der Waren zu Warengruppen zum Einsatz. Die Waren werden dabei erfindungsgemäß in ein Gebinde, wie zum Beispiel einen Beutel oder Sack, der sich in dem am Hängeförderer hängenden Korb befindet, hinein kommissioniert. Es ist für den Fachmann verständlich, dass sich die vorgängig gemachten Aussagen zur erfindungsgemässen Kommissionierung in Taschen auf die ebenfalls erfindungsgemässe Kommissionierung in Gebinde in Körben übertragen lassen und hier nicht nochmals wiederholt werden müssen.

Gebinde die keine ausreichende Eigenstabilität aufweisen um in einer offenen Stellung zu verbleiben, werden, vorzugsweise mittels eines Halters, im Korb gehalten.

Beim Einsatz eines solchen "Gebinde-im-Korb" Systems können die Gebinde jeweils in einem ersten Schritt vor dem Einfüllen von Waren im Korb angebracht werden oder es befindet sich ein Vorrat von Gebinden, zum Beispiel in Form von aufgerollten Plastiksäcken, bereits im Korb und es wird jeweils ein Gebinde vor dem Einfüllen der Waren geöffnet. Nach dem Kommissionieren werden die Warengruppen in der Entleerungsvorrichtung zusammen mit dem Gebinde aus dem Korb entleert. Die Warengruppe wird dabei vollständig aus dem Korb entleert.

Gemäss weiterer vorteilhafter Ausführungsformen können mehr als ein geöffnetes Gebinde in einem Transportkorb angeordnet werden.

Sowohl bei der Kommissionierung in die Taschen, wie auch bei der Kommissionierung in Gebinde in Transportkörben können mehrere gleiche, aber insbesondere mehrere verschiedene Artikel zu einer Warengruppe zusammengestellt werden.

Eine Möglichkeit der Zwischenspeicherung von Taschen und Körben mit unvollständigen Warengruppen ist vorteilhaft, da die bestellten Waren oft nicht alle gleichzeitig an den Einfüllstationen bereitgestellt werden können.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einem Schema den Ablauf beim Kommissionieren gemäss der Erfindung;
- Fig. 2: eine beispielhafte Tasche eines Hängeförderers, die in einem Schritt mit einer Warengruppe befüllt wird;
- Fig. 3: die Tasche aus Fig. 2, die in mehreren Schritten nacheinander durch verschieden Einfüllvorrichtungen mit den Waren einer Warengruppe befüllt wird;
- Fig. 4: die Tasche aus Fig. 2, die in mehreren Schritten nacheinander durch ein und dieselbe Einfüllvorrichtung mit den Waren einer Warengruppe befüllt wird;
- Fig. 5: in einer schematisierten Darstellung eine Kommissionierungsanlage gemäss einem Ausführungsbeispiel der Erfindung;
- Fig. 6: in einer schematisierten Darstellung eine Kommissionierungsanlage mit Umlaufspeicher gemäss einem anderen Ausführungsbeispiel der Erfindung;
- Fig. 7: eine für die Erfindung geeignete Tasche mit Öffnungsbügel in verschiedenen Öffnungsphasen;
- Fig. 8: eine andere für die Erfindung geeignete Tasche mit einem Taschenrahmen in Form eines Parallelogramms und Rollen für eine Kulissenführung im geöffneten und geschlossenen Zustand;
- Fig. 9: die wesentlichen Elemente einer Einfüllvorrichtung, mit der im Rahmen der Erfindung die kommissionierten Waren kontinuierlich in die an einem Hängeförderer hängenden Taschen eingefüllt werden können;
- Fig. 10: die wesentlichen Elemente einer Entleerungsvorrichtung, mit der im Rahmen der Erfindung die kommissionierten Waren kontinuierlich aus den an einem Hängeförderer hängenden Taschen ausgeleert werden können;
- Fig. 11: eine Seitenansicht eines für die Erfindung geeigneten Korbs zur Aufnahme von Gebinden zur Warenaufnahme, wobei der Korb in der Fig. 11a in einer eingeklappten platzsparenden Stellung und in der der Fig. 11b in der aufgeklappten Stellung zur Aufnahme des Gebindes dargestellt ist:
- Fig. 12: ein Gebinde in Form eines Sacks mit zwei Trageschlaufen, zum Einsatz mit einem Korb gemäss Fig. 11;
- Fig. 13: einen Korb gemäss Fig. 11 der einen geöffneten und mit Waren befüllten Sack gemäss Fig. 12 transportiert; und
- Fig. 14: den befüllten Sack gem. Fig. 14, der aus dem Korb entnommen ist.

### WEGE ZUR AUSFÜHRUNG DER ERFINDUNG

Im Rahmen der Erfindung werden generell Waren oder Artikel kommissioniert, indem sie in hängend transportierten Taschen durch Befüllen der Taschen gezielt zu Warengruppen zusammengestellt werden. Eine Warengruppe kann dabei lauter verschiedene Waren umfassen, aber auch eine Ware mehrfach enthalten. Im Extremfall kann eine Warengruppe auch nur aus einer Ware bzw. einem Artikel bestehen.

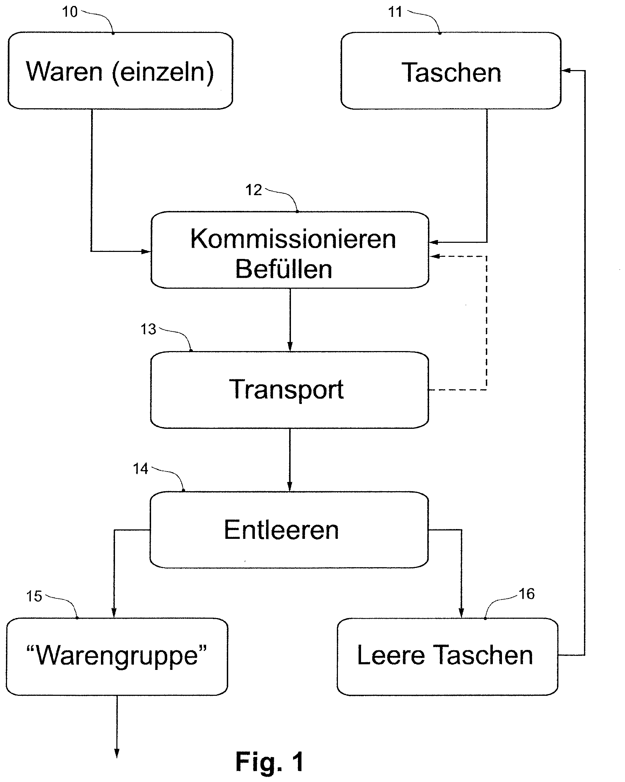

In Fig. 1 ist in einem Schema der Ablauf beim Kommissionieren gemäss der Erfindung dargestellt. Der Kommissionierungsprozess beginnt mit einer Warenauslagerung 10, in deren Verlauf die zur Kommissionierung benötigten Waren einzeln oder auch - wenn dies die Kommissionierung erfordert - mehrfach aus einer Warenansammlung oder einem Warenvorrat herausgenommen, oder aus einem Warenlager, beispielsweise einem Hochregallager, ausgelagert und zu einem Ort transportiert werden, wo der eigentliche Kommissionier- und Befüllvorgang 12 abläuft. Gleichzeitig erfolgt eine Taschenbereitstellung 11, durch welche die hängend beförderten Taschen (leer oderteilgefüllt) ebenfalls zu dem Ort des Kommissionier- und Befüllvorgangs 12 transportiert werden.

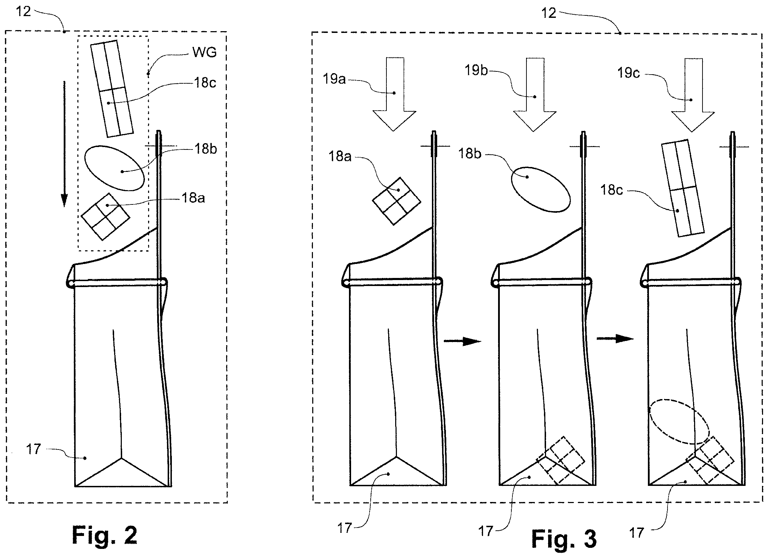

Der eigentliche Kommissionier- und Befüllvorgang 12 kann nun auf verschiedene Weise ablaufen: Im einen Fall (Fig. 2) wird die Warengruppe WG, die im Beispiel aus mehreren verschiedenen Waren 18a-c besteht, bereits ausserhalb der Tasche 17 kommissioniert und dann in einem Befüllvorgang in die Tasche 17 eingefüllt.

In einem anderen Fall (Fig. 3) werden die Waren 18a-c der kommissionierten Warengruppe in separaten Befüllvorgängen in die Tasche 17 eingefüllt, für die separate Einfüllvorrichtungen 19a-c (in Fig. 3 symbolisiert durch einen Pfeil) eingesetzt werden. Die Einfüllvorrichtungen 19a-c sind insbesondere entlang einem (nicht gezeigten) Hängeförderer für die Taschen 17 in Förderrichtung hintereinander angeordnet und die Tasche 17 wird mittels des Hängeförderers nacheinander an den Einfüllvorrichtungen 1 9a-c vorbeigeführt und dort befüllt. Die Einfüllvorrichtungen 19a-c können dabei linear hintereinander aber auch in einem Kreis angeordnet sein.

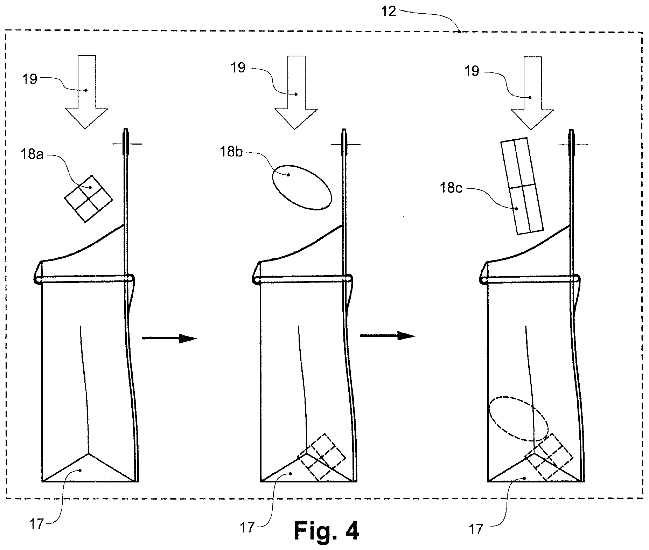

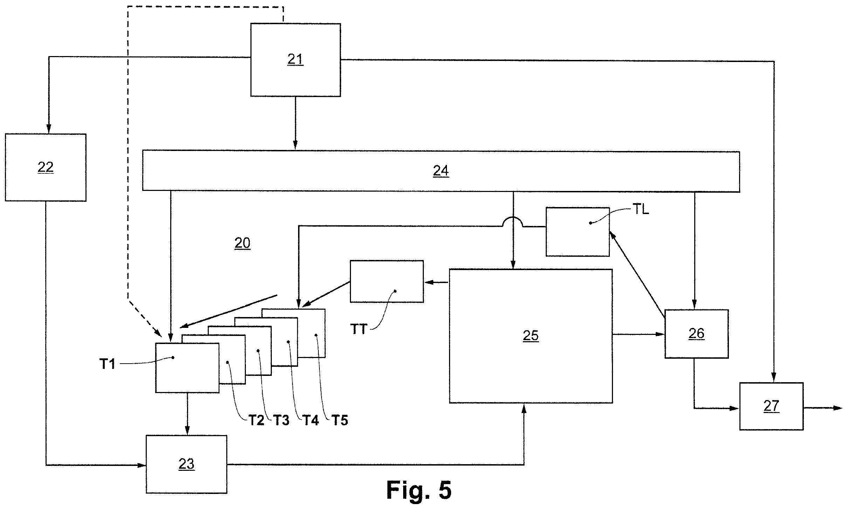

In einem weiteren Fall (Fig. 4) können die Waren 18a-c der kommissionierten Warengruppe zwar auch in separaten Befüllvorgängen nacheinander in die Taschen eingefüllt werden, jedoch werden hierzu keine separaten Einfüllvorrichtungen wie im Fall der Fig. 3 verwendet, sondern das Befüllen erfolgt mit ein und derselben Einfüllvorrichtung 19, in dem dieselbe Tasche 17 in einer Transportschleife mehrfach an der Einfüllvorrichtung 19 vorbeigeführt und dort jeweils mit einer der Waren befüllt wird. Dieser Fall wird durch den gestrichelten Pfeil in Fig. 1 symbolisiert, der vom Taschentransport 13 zurück zum Kommissionier- und Befüllvorgang 12 führt (siehe auch die Fig. 5).

Ist im Rahmen der Kommissionierung die Tasche mit der kommissionierten Warengruppe WG gefüllt, wird sie - wenn sie nicht zwischengespeichert wird - mittels Taschentransport 13 an einem Hängeförderer hängend zu einem Ort transportiert, wo eine Taschenentleerung 14 stattfindet. Die aus der Taschen entleerte Warengruppe WG wird dann im Rahmen einer Warenausgabe 15 zur Weiterverarbeitung (z.B. Auslieferung) freigegeben, die beispielsweise ein Zusammenfassen zu grösseren Einheiten (z.B. für ein Zielgebiet nach Postleitzahlen oder einen Empfänger) für einen anschliessenden Transport beinhalten kann.

Die geleerten Taschen werden im Rahmen einer Taschenrückführung 16 für eine erneute Befüllung per Kommissionierung zur Taschenbereitstellung 11 zurückbefördert.

Die Orte zur Befüllung und Entleerung der Taschen sind nicht mit einzelnen Beladestationen gleichzusetzten, sondern stellen zum Beispiel Förderstrecken dar, in denen in die Taschen mittels einer Mehrzahl- oder Vielzahl von Beladestationen hineinkommissioniert werden kann und/oder in denen die Taschen mittels Entleerungsvorrichtungen entleert werden können. Dies kann zum Beispiel entlang eines Gangs oder sogar in unterschiedlichen Räumen erfolgen.

In Fig. 5 ist in einer schematisierten Darstellung eine Kommissionierungsanlage 20 gemäss einem Ausführungsbeispiel der Erfindung wiedergegeben. In der Kommissionierungsanlage werden Waren aus einer Warenansammlung 22 ausgelagert und durch Übergabe an eine als Einfüllvorrichtung 23 ausgebildete Aufgabestation bereitgestellt. Eine mit einem Hängeförderer arbeitende Sortieranlage 25 führt der Einfüllvorrichtung 23 nacheinander (beispielhafte) Taschen T1-T5 zu, die dann in der Einfüllvorrichtung 23 mit den Waren gemäss Kommissionierung befüllt werden. Die Taschen T1 -T5 können je nach Vorgeschichte und Art der Befüllung leere Taschen TL sein, die von einer Entleerungsvorrichtung bzw. Abgabestation 26 zurückgeführt sind, oder teilgefüllte Taschen TT, die im Rahmen der Kommissionierung zur Befüllung mit einer Warengruppe nacheinander mehrmals in einem Kreislauf der Einfüllvorrichtung 23 zugeführt und dort jeweils nur mit einzelnen Waren oder Teilmengen der Warengruppe befüllt werden und erst dann an die Entleerungsvorrichtung 26 weitergegeben werden, wenn die kommissionierte Warengruppe vollständig eingefüllt worden ist. Der Entleerungsvorrichtung bzw. Abgabestation 26 kann eine Warenausgabe 27 nachgeschaltet sein, die insbesondere den Versand der kommissionierten Waren umfasst.

Die Sortieranlage 25 mit dem Hängeförderer und die damit verbundene Bereitstellung der leeren und/oder teilgefüllten Taschen TL bzw. TT zum Befüllen, sowie die Entleerungsvorrichtung 26 werden durch eine zentrale Steuerung 24 gesteuert, die füreine automatische Zuordnung von Warengruppen und Taschen und deren Befüllung und Entleerung sorgt. Dieser Steuerung 24 übergeordnet ist ein ERP-System 21. Das ERP-System 21, dem generell die Aufgabe des Enterprise-Resource-Planning (ERP) zukommt, sorgt dafür, dass nach Art einer Materialbedarfsplanung sichergestellt ist, dass alle für die Kommissionierung erforderlichen Waren an der richtigen Stelle, zur richtigen Zeit und in der richtigen Menge zur Verfügung stehen. Dies umfasst insbesondere das Vorbereiten der Waren in der Warenansammlung 22, das Auslagern der Waren aus der Warenansammlung (z.B. einem Hochregallager) 22, die Überwachung und Lenkung der Steuerung 24 sowie die Übermittlung von Daten an die Warenausgabe 27, die - wenn es um einen Warenversand geht - Versanddaten wie Adresse, Gewicht, Porto, Kartongrösse etc. beinhalten kann.

Sind die Taschen T1-T5 bzw. TT und TL mit optischen (z.B. Strichcode) oder elektromagnetisch ein- und auslesbaren (z.B. RFID) Informationsträgern ausgerüstet, kann das ERP-System 21 auch den Tascheninhalt (die kommissionierten Warengruppen) mit dem Informationsinhalt der Informationsträger koordinieren bzw. abgleichen (gestrichelter Pfeil in Fig. 5).

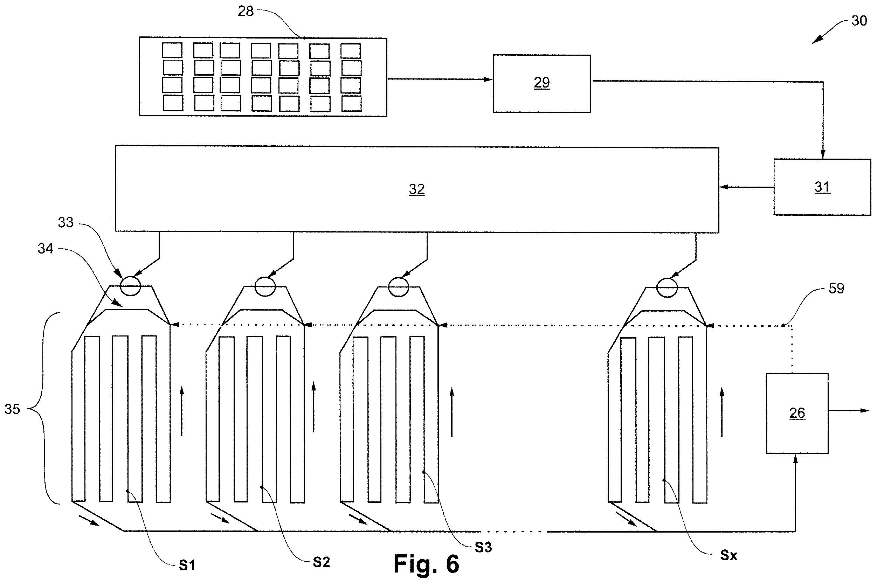

Fig. 6 zeigt in einer schematisierten Darstellung eine Kommissionierungsanlage mit Umlaufspeicher gemäss einem anderen Ausführungsbeispiel der Erfindung. Die Kommissionierungsanlage 30 geht wieder aus von einer Warenansammlung 28, aus der die zu kommissionierenden Waren mittels einer Auslagerungsvorrichtung 29 ausgelagert und dann in einer Vereinzelungsstation 31 vereinzelt und einzeln an eine Verteilstation 32 weitertransportiert werden. An die Verteilstation 32 ist ein Umlaufspeicher 35 angeschlossen, der eine Vielzahl von gleichartigen, parallel arbeitenden Speichereinheiten S1 -Sx umfasst. In jeder Speichereinheit Sx ist ein geschlossener Umlauf mit einem Hängeförderer 59 vorgesehen, dessen Länge durch eine mäanderförmige Ausbildung so vergrössert ist, dass eine Vielzahl von leeren, teilbefüllten oder befüllten Taschen darin umlaufen kann.

Im Kopfbereich jeder Speichereinheit Sx ist eine Einfüllvorrichtung 33 vorgesehen, in der die kommissionierten Waren über die Verteilstation 32 in entsprechende Taschen der Speichereinheit Sx eingefüllt werden können. Die Einfüllvorrichtung 33 kann nach Art eines Bypasses über eine Nebenförderstrecke 34 umgangen werden. Die Nebenförderstrecke 34 wird (umschaltbar) dann benutzt, wenn Taschen ohne Befüllung im Umlauf der Speichereinheit weiterbewegt werden sollen (weil gerade eine nachfolgende Tasche befüllt werden soll), oder wenn eine von einer gemeinsamen Entleerungsvorrichtung 26 zurückgeführte Tasche auf der Rückführungsstrecke an bestimmten der hintereinander geschalteten Speichereinheiten S1 -Sx vorbeigeschleust werden soll.

Die Speichereinheiten S1 -Sx dienen insbesondere dazu, "auf Vorrat" zu kommissionieren (oder leere Taschen bereitzuhalten), d.h. es können in Zeiten, in denen keine oder nur wenige kommissionierte Waren ausgegeben werden, Taschen in den Speichereinheiten S1 - Sx mit kommissionierten Waren oder Artikeln befüllt werden, die erst zu einem späteren Zeitpunkt der mindestens einen Entleerungsvorrichtung 26 zugeführt und dann dort im Zuge einer Warenausgabe entleert werden. Zu diesem Zweck sind die Speichereinheiten S1-Sx über eine gemeinsame Ausspeicherstrecke (mit einem Hängeförderer 59) mit der Entleerungsvorrichtung 26 verbunden. Der Hängeförderer 59 transportiert auch die ausgeleerten Taschen zurück zu den Speichereinheiten, wobei - wenn die Ziel-Speichereinheit in Förderrichtung weiter hinten angeordnet ist - die davor liegenden Speichereinheiten auf der Nebenförderstrecke 34 passiert werden.

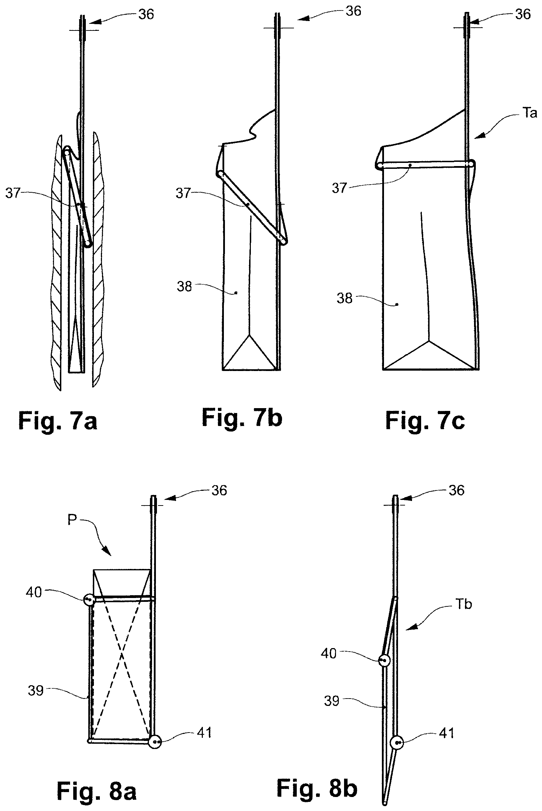

Als hängend beförderte Taschen kommen im Rahmen der vorliegenden Erfindung verschieden Arten von Taschen in Betracht. Zwei Beispiele sind in den Fig. 7 und 8 wiedergegeben, wobei die Teilfiguren die jeweilige Tasche in unterschiedlichen Öffnungszuständen zeigen. Diese Taschen eignen sich besonders gut für Sortier- und Verteilaufgaben der Waren bzw. Warengruppen.

Die Tasche Ta der Fig. 7 zeichnet sich dadurch aus, dass der an einer Hängebefestigung 36 unten angebrachte, beutelartige Taschenkörper 38 im oberen Bereich, der zugleich die Öffnung umfasst, von einem Öffnungsbügel 37 umschlossen ist, der auf der Vorder- und Rückseite des Taschenkörpers 38 in Schlaufen so gelagert ist, dass er aufgrund der Schwerkraft von einer horizontalen Öffnungsposition (Fig. 7(c)) verkippt (Fig. 7(b)) und dabei den Taschenkörper 38 mehr und mehr zusammenfaltet, bis er in der geschlossenen Endposition (Fig. 7 (a)) nur noch wenig Platz einnimmt. Ein solches Verhalten ist vor allem dann von Vorteil, wenn eine Vielzahl von leeren Taschen bei gleichzeitig möglichst geringem Platzbedarf zur Kommissionierung bereitgehalten werden muss.

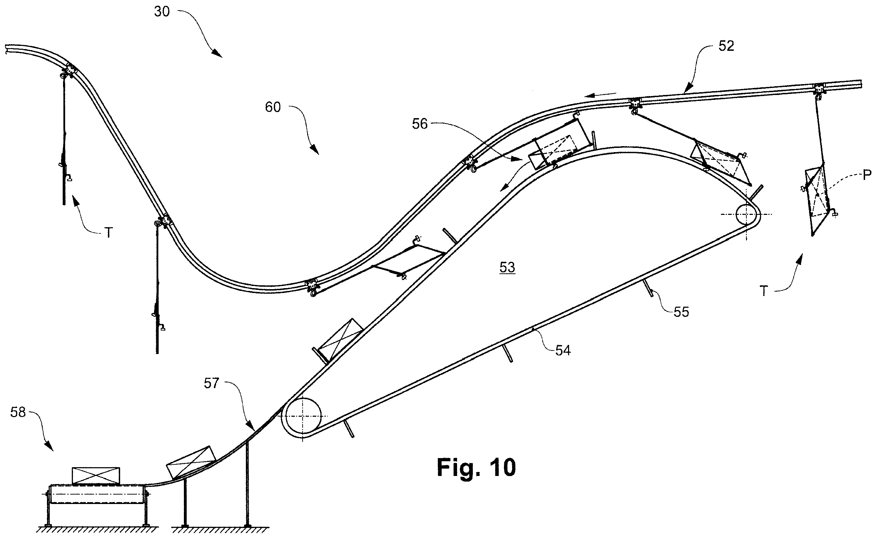

Die Tasche Tb der Fig. 8 zeigt aufgrund eines faltbaren Taschenrahmens 39 nach Art eines Parallelogramms ein ähnliches Verhalten, indem die gefüllte Tasche (Fig. 8(a)) nach der Entleerung (Fig. 8(b)) selbständig in eine flache Konfiguration übergeht. Der Taschenrahmen 39 bietet zudem die Möglichkeit, an bevorzugten Ecken Rollen 40, 41 vorzusehen, die beim Füllen und Entleeren mittels einer Kulissenführung von Vorteil sind (siehe Fig. 10).

Andere Arten von Taschen, die ebenfalls im Rahmen der Erfindung eingesetzt werden können und an den Seiten offen sind, sind z.B. aus der Druckschrift WO2016/1 20030A1 oder WO2016/120031A1 bekannt.

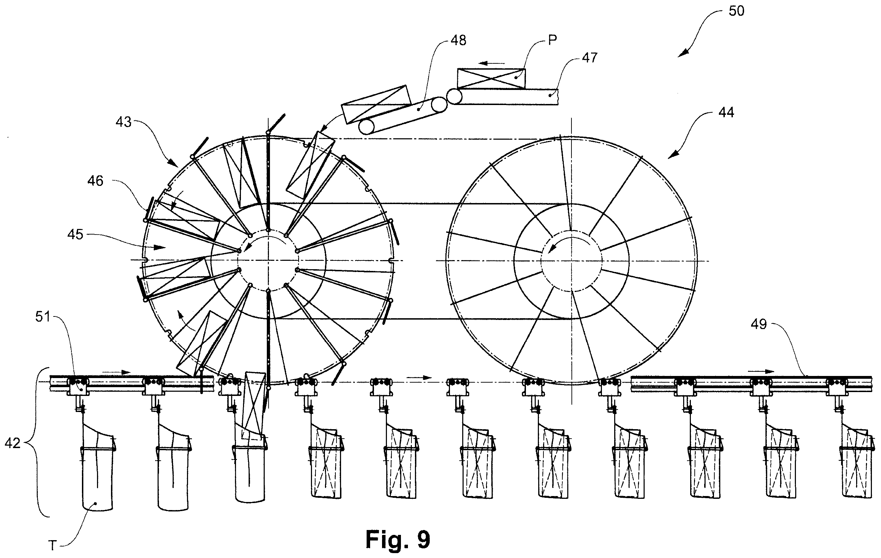

Fig. 9 zeigt die wesentlichen Elemente einer Einfüllvorrichtung 50, mit der im Rahmen der Erfindung die kommissionierten Waren kontinuierlich in die an einem Hängeförderer 42 hängenden Taschen T eingefüllt werden können. Der Hängeförderer 42 hat eine sich in Förderrichtung erstreckende Laufschiene 49, an der einzelne Laufwagen 51 in Förderrichtung verfahrbar gelagert und gehalten sind. An jedem der Laufwagen ist hängend eine Tasche T befestigt, die gemäss Fig. 7 mit einem Öffnungsbügel ausgerüstet ist. Laufschiene 49 und Laufwagen 51 können die gleiche Ausgestaltung haben, wie sie aus den Druckschriften WO2016/030275A1, WO2016/030274A1 und WO2016/030273A1 bekannt sind.

Oberhalb des horizontal verlaufenden Hängeförderers 42 ist eine sich mit dem Hängeförderer 42 synchron bewegende Einfüllvorrichtung 43 angeordnet, die über den Umfang in sektorale Einfüllfächer 45 unterteilt ist. Diese Einfüllfächer 45 können jeweils eine Ware aufnehmen, in diesem Beispiel ein Paket P, die an im Berührungsbereich zwischen Einfüllvorrichtung 43 und Hängeförderer 42 aus dem Einfüllfach in die darunter sich mitbewegende, geöffnete Tasche T eingefüllt wird.

In die Einfüllvorrichtung 43 eingeführt werden die Waren P am oberen Scheitelpunkt der Trommel mittels zweier aneinander anschliessender Förderbänder 47 und 48. Damit die in den Einfüllfächern 45 befindliche Ware beim Weiterdrehen der Vorrichtung nicht ungewollt aus den Einfüllfächern 45 herausrutschen kann, sind am offenen Ende der Einfüllfächer 45 Einfüllklappen 46 verschwenkbar angelenkt, die im eingeschwenkten Zustand ein Herausrutschen der Ware verhindern, zur Übergabe der Ware an die am Hängeförderer 42 hängende Tasche T aber dann ausgeschwenkt werden. Weitere gleichartige Einfüllvorrichtungen 44 (in Fig. 9 nicht weiter detailliert) können entlang der Förderrichtung hintereinander angeordnet werden, um ein Befüll-Schema gemäss Fig. 3 zu verwirklichen.

Fig. 10 zeigt die wesentlichen Elemente einer Entleerungsvorrichtung 60, mit der im Rahmen der Erfindung die kommissionierten Waren kontinuierlich aus den an einem Hängeförderer 52 hängenden Taschen T ausgeleert werden können. Der Hängeförderer 52 wird dazu in einer Biegung nach unten geführt. In dieser Biegung ist unterhalb des Hängeförderers 52 eine Abnahmevorrichtung 53 angeordnet, welche ein umlaufendes Abnahmeband 54 umfasst, das über eine vorbestimmte Strecke parallel mit einem festen Abstand zum Hängeförderer 52 geführt ist. Auf dieser Strecke der Parallelführung ergibt sich ein Übergabebereich 56 für die in den Taschen T befindlichen Waren P, die aus den Taschen T heraus auf das Abnahmeband 54 fallen und dort mittels in Abständen auf dem Abnahmeband 54 angeordneter Halteelemente 55 gestoppt und mit dem Band zu einem unteren Umlenkpunkt befördert werden, wo sie an eine anschliessende Rutsche 57 übergeben werden.

Die Anordnung und das Zusammenwirken von Hängeförderer 52 und Abnahmeband 54 führen dazu, dass die am Hängeförderer 52 hängenden (befüllten) Taschen T von der vertikalen hängenden Position rückwärts nach oben verschwenkt werden, bis sie am Übergabebereich 56 eine Lage einnehmen, in der die obere Öffnung der Tasche schräg nach unten zeigt und die in der Tasche befindliche Ware P schwerkraftbedingt aus der Tasche herausfallen lässt.

Nach der Übergabe an die Rutsche 57 rutscht die Ware P auf einen quer angeordneten Bandförderer 58, der die Ware einer (nicht weiter spezifizierten) Weiterverarbeitung zuführt.

In den Fig. 9 und 10 ist der Einfachheit halber die in die Tasche T kommissionierte Warengruppe durch ein einzelnes Paket P symbolisiert. Es versteht sich von selbst, dass dies ein Spezialfall der Kommissionierung ist und dass in der Regel die Warengruppe einer Tasche mehrere, meist unterschiedliche Waren umfasst.

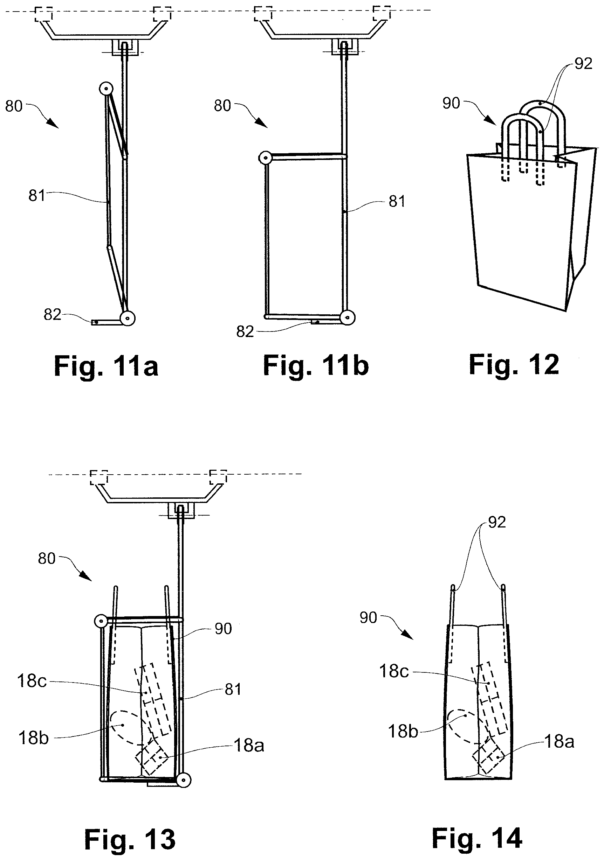

In Fig. 11 ist ein Korb 80 in Seitenansicht dargestellt, der gemäss einer weiteren Ausführungsform der Erfindung vorteilhafterweise zusammen mit Gebinden wie Transport-Beuteln oder Säcken zum Einsatz kommt. Ein solches Gebinde in Form eines Sackes 90 ist in Figur 12 dargestellt. Der Korb 80 ist ähnlich wie die in Figur 8 gezeigten Taschen aufgrund eines faltbaren Fächer- oder Gitterrahmens 81 nach Art eines Parallelogramms von einer flache Konfiguration, wie sie in Figur 11a dargestellt ist in eine aufgeklappte Konfiguration gemäss Fig. 11b überführbar. Ein Anschlag 82 stabilisiert den Fächer- oder Gitterrahmens 81 in der geöffneten Position und verhindert ein schwerkraftgetriebenes Zusammenklappen. Es können wiederum an bevorzugten Ecken Rollen vorgesehen sein, die beim Füllen und Entleeren mittels einer Kulissenführung von Vorteil sind.

In den aufgeklappten Korb gemäss Fig. 11b kann in einem, dem Befüllen vorgeschalteten Schritt ein Sack 90 eingebracht werden, wie er in Figur 12 dargestellt ist. Der Sack 90 weist eine ausreichende Eigenstabilität auf, dass er im Korb in einer geöffneten Konfiguration stehen bleibt. Zwei Tragschlaufen 92, die Oberseits an den gegenüberliegenden Seitenwänden des Sacks 90 angeordnet sind, erleichtern das Entnehmen des mit Waren 18 a - 18c befüllten Sacks 90 aus dem Korb 80, wie er in Fig. 13 dargestellt ist.

Nach der Entnahme des befüllten Sacks 90 kann dieser wie in Fig. 14 dargestellt zusammen mit den Waren 18a - 18c weiterverarbeitet, vorzugsweise dem Besteller oder Endverbraucher der Waren zugestellt werden. Vorteilhafter Weise trägt der Sack eine Etikette, die mit einer Kennung versehen ist, die die weitere Verarbeitung und/der die Zustellung erleichtert. Der Sack kann zum Beispiel mit einer Adressetikette versehen sein und/oder eine Liste der zu befüllenden Waren 18a - 18c tragen. Eine solche, nicht in den Figuren dargestellte, Etikette kann optisch und/oder elektronisch bedruckt, beschrieben und auslesbar ausgestaltet sein. Um die Kennung des Sacks im Korb möglichst einfach zu gestalten ist die Etikette gemäss einer vorteilhaften Ausgestaltung als RFID-Tag ausgestaltet.

Werden schlaffe Gebinde wie Textil- oder Folienbeutel zusammen mit den Körben eingesetzt, so hat es sich als vorteilhaft erwiesen mehrere Laschen an der Oberseite der Beutel anzuordnen, die an geeigneten Halterungen der Körbe eingehängt werden können. Sollen die Laschen vermieden werden, so kann der obere Beutelrand an geeigneten Haltern des Korbs klemmend gehalten oder über den oberen Rand des Korbs gestülpt werden.

Die Gebinde, in denen die auszuliefernden Waren nach dem Kommissionieren verbleiben, lassen sich vorzugsweise oberseitig verschliessen.

## Patentansprüche

1. Verfahren zum Kommissionieren von Waren (18a-c), bei welchem Verfahren die einzelnen Waren (18a-c) aus einer Warenansammlung (22, 28) herausgenommen, gemäss Vorgaben zu Warengruppen (WG) in an einem Hängeförderer (42, 52, 59) hängende Taschen (17, T, T1-T5, Ta, Tb) oder Körbe (80) hinein zusammengestellt und in Form dieser Warengruppen (WG) zur weiteren Verarbeitung ausgegeben werden, **dadurch gekennzeichnet, dass** die Waren in ein in der Tasche (17, T, T1-T5, Ta, Tb) oder dem Korb (80) angebrachtes Gebinde (90) eingefüllt werden, wobei eine Warengruppe (18a, 18b, 18c) in ein Gebinde (90) eingefüllt oder auf mehrere Gebinde (90) verteilt wird, wobei das Gebinde (90) in einem ersten Schritt vor dem Einfüllen von Waren (18a, 18b, 18c) in eine Tasche (17, T, T1-T5, Ta, Tb) oder einen Korb (80) eingebracht und anschliessend befüllt wird.

2. Verfahren nach Anspruch 1, **dadurch gekennzeichnet, dass** jeder Warengruppe (WG) wenigstens eine eigene Tasche (17, T, T1-T5, Ta, Tb) oder ein eigener Korb (80) zugeordnet wird.

3. Verfahren nach Anspruch 1, **dadurch gekennzeichnet, dass** in mindestens eine Tasche (17, T, T1 -T5, Ta, Tb) oder in mindestens einen Korb (80) eine aus mehreren Waren (18a-c) bestehende Warengruppe (WG) eingefüllt wird.

4. Verfahren nach Anspruch 1, **dadurch gekennzeichnet, dass** die Warengruppen (WG) jeweils in einem einzigen Befüllvorgang in die dafür vorgesehenen Taschen (1 7, T, T1-T5, Ta, Tb) oder Körbe (80) eingefüllt werden.

5. Verfahren nach Anspruch 1, **dadurch gekennzeichnet, dass** die zu einer Warengruppe (WG) gehörenden Waren (18a-c) unter Bildung der Warengruppe (WG) in mehreren nacheinander ausgeführten Befüllvorgängen in die dafür vorgesehenen Taschen (17, T, T1-T5, Ta, Tb) oder Körbe (80) eingefüllt werden.

6. Verfahren nach Anspruch 5, **dadurch gekennzeichnet, dass** für jede einzelne Ware (18a-c) ein eigener Befüllvorgang durchgeführt wird.

7. Verfahren nach Anspruch 5 oder 6, **dadurch gekennzeichnet, dass** die Tasche (17, T, T1-T5, Ta, Tb) oder der Korb (80) zum Befüllen nacheinander an verschiedenen Einfüllvorrichtungen (1 9a-c, 43, 44) vorbeigeführt wird.

8. Verfahren nach einem der Ansprüche 1 bis 7, **dadurch gekennzeichnet, dass** die Taschen (17, T, T1-T5, Ta, Tb) oder Körbe (80) nach dem Befüllen mit der vorgesehenen Warengruppe (WG) zunächst zwischengelagert werden, bevor die darin enthaltenen Warengruppen (WG) zur weiteren Verarbeitung ausgegeben werden.

9. Verfahren nach einem der Ansprüche 1 bis 8, **dadurch gekennzeichnet, dass** sich eine Mehrzahl von Gebinden in der Tasche (17, T, T1-T5, Ta, Tb) oder dem Korb (80) befindet und ein Gebinde in einem ersten Schritt vor dem Einfüllen von Waren (18a, 18b, 18c) geöffnet und anschliessend befüllt wird.

10. Verfahren nach einem der Ansprüche 1 bis 9, **dadurch gekennzeichnet, dass** die Warengruppe (18a, 18b, 18c) zusammen mit dem oder den Gebinden (90) aus dem Korb (80) entleert wird.

11. Verfahren nach einem der Ansprüche 1 bis 10, **dadurch gekennzeichnet, dass** die Taschen (17, T, T1-T5, Ta, Tb) oder Körbe (80) komplett von den enthaltenen Warengruppen (WG) entleert werden.

12. Kommissionierungsanlage (20, 30) zur Durchführung des Verfahrens nach einem der Ansprüche 1 bis 11, **dadurch gekennzeichnet, dass** die Kommissionierungsanlage (20, 30) Taschen und/oder Körbe, sowie Gebinden (90) zur Zusammenstellung der Waren zu Warengruppen umfasst, wobei
eingangsseitig eine Warenansammlung (22, 28) mit den zu kommissionierenden Waren (18a-c) mit wenigstens einer daran anschliessenden Einfüllvorrichtung (19, 19a-c, 23, 33, 50) für die Taschen (17, T, T1-T5, Ta, Tb) und/oder Körbe (80), sowie
ausgangsseitig eine Entleerungsvorrichtung (26, 60) für die mit den Warengruppen (WG) befüllten Taschen (17, T, T1-T5, Ta, Tb) oder Körbe (80) aufweist, und dass zwischen der wenigstens einen Einfüllvorrichtung (19, 19a-c, 23, 33, 50) und der Entleerungsvorrichtung (26, 60) ein Hängeförderer (25, 42, 52, 59) für die Taschen (17, T, T1-T5, Ta, Tb) und/oder Körbe (80) angeordnet ist, welcher Hängeförderer (25, 42, 52, 59) die wenigstens eine Einfüllvorrichtung (19, 19a-c, 23, 33, 50) mit der Entleerungsvorrichtung (26, 60) verbindet,
wobei die Zusammenstellung der Waren zu Warengruppen in ein Gebinde (90), vorzugsweise einen Beutel oder Sack, in die am Hängeförderer hängenden Körbe (80) und/oder Taschen (17, T, T1-T5, Ta, Tb) hinein erfolgt, wobei das Gebinde (90) in einem ersten Schritt vor dem Einfüllen von Waren (18a, 18b, 18c) in eine Tasche (17, T, T1-T5, Ta, Tb) oder einen Korb (80) eingebracht und anschliessend befüllt wird.

13. Kommissionierungsanlage nach Anspruch 12, **dadurch gekennzeichnet, dass** der Hängeförderer (25, 42, 52, 59) die wenigstens eine Einfüllvorrichtung (19, 19a-c, 23, 33, 50) mit der Entleerungsvorrichtung (26, 60) in einem geschlossenen Umlauf verbindet, wobei der Hängeförderer (25, 42, 52) vorzugsweise an mehreren hintereinander angeordneten Einfüllvorrichtungen (1 9a-c) vorbeigeführt ist.

14. Kommissionierungsanlage nach Anspruch 12, **dadurch gekennzeichnet, dass** für die Steuerung von Einfüllvorrichtung (19, 19a-c, 23, 33, 50), Entleerungsvorrichtung (26, 60) und Hängeförderer (25, 42, 52, 59) eine gemeinsame Steuerung (24) vorgesehen ist.

15. Kommissionierungsanlage nach Anspruch 14, **dadurch gekennzeichnet, dass** die gemeinsame Steuerung (24) für die Zuordnung der Waren (18a-c) einer Warengruppe (WG) zu einzelnen oder mehreren Taschen oder Körben (80) ausgelegt ist.

16. Kommissionierungsanlage nach Anspruch 14 oder 15, **dadurch gekennzeichnet, dass** die gemeinsame Steuerung (24) zur Übermittlung von Kommissionierungsdaten, insbesondere Daten der Warengruppen, an ein ERP-System (21) angeschlossen ist.

17. Kommissionierungsanlage nach Anspruch 12, **dadurch gekennzeichnet, dass** die Kommissionierungsanlage (50) wenigstens eine Einfüllvorrichtung (43, 44) umfasst, welche sich entlang dem darunter vorbeigeführten Hängeförderer (42) bewegt und aus mitbewegten Einfüllfächern (45) Waren (P) in die darunter vorbeibewegtenTaschen (T) oder Körbe (80) einfüllt.

18. Kommissionierungsanlage nach Anspruch 12, **dadurch gekennzeichnet, dass** die Entleerungsvorrichtung (60) eine Abnahmevorrichtung (53) umfasst, welche die befüllten, am Hängeförderer (52) hängenden Taschen (T) oder Körbe (80) in eine Entleerungsstellung verschwenkt und gleichzeitig die in der Entleerungsstellung aus den Taschen (T) oder Körben (80) herauskommenden Waren (P) aufnimmt und weiterbefördert.

19. Kommissionierungsanlage nach einem der Ansprüche 12 bis 18, **dadurch gekennzeichnet, dass** das Gebinde (90) in einer offenen Stellung mittels eines Halters im Korb (80) gehalten ist.

## Claims

1. Method for order-picking goods (18a-c), in which method the individual goods (18a-c) are removed from a goods collection (22, 28), combined into groups of goods (WG) according to specifications into bags (17, T, T1-T5, Ta, Tb) or baskets (80) suspended on a suspension conveyor (42, 52, 59) and outputted in the form of these groups of goods (WG) for further processing, **characterized in that** the goods are filled into a package (90) which is attached in the bag (17, T, T1-T5, Ta, Tb) or the basket (80), wherein a group of goods (18a, 18b, 18c) is filled into one package (90) or divided among a plurality of packages (90), wherein the package (90) in a first step before filling in goods (18a, 18b, 18c) is introduced into a bag (17, T, T1-T5, Ta, Tb) or a basket (80) and is subsequently filled.

2. Method according to Claim 1, **characterized in that** each group of goods (WG) is assigned at least one dedicated bag (17, T, T1-T5, Ta, Tb) or a dedicated basket (80).

3. Method according to Claim 1, **characterized in that** a group of goods (WG) composed of a plurality of goods (18a-c) is filled into at least one bag (17, T, T1-T5, Ta, Tb) or into at least one basket (80).

4. Method according to Claim 1, **characterized in that** the groups of goods (WG) are each filled into the bags (17, T, T1-T5, Ta, Tb) or baskets (80) provided for this purpose in a single filling procedure.

5. Method according to Claim 1, **characterized in that** the goods (18a-c) associated with a group of goods (WG), while forming the group of goods (WG), are filled into the bags (17, T, T1-T5, Ta, Tb) or baskets (80) provided for this purpose in a plurality of subsequent filling procedures.

6. Method according to Claim 5, **characterized in that** a dedicated filling procedure is carried out for each individual good (18a-c).

7. Method according to Claim 5 or 6, **characterized in that** the bag (17, T, T1-T5, Ta, Tb) or the basket (80) for filling is guided past different subsequent filling devices (19a-c, 43, 44).

8. Method according to one of Claims 1 to 7, **characterized in that** the bags (17, T, T1-T5, Ta, Tb) or baskets (80) after filling with the scheduled group of goods (WG) are initially temporarily stored before the groups of goods (WG) contained therein are dispensed for further processing.

9. Method according to one of Claims 1 to 8, **characterized in that** a plurality of packages are arranged in the bag (17, T, T1-T5, Ta, Tb) or the basket (80), and a package in a first step prior to being filled with goods (18a, 18b, 18c) is opened and subsequently filled.

10. Method according to one of Claims 1 to 9, **characterized in that** the group of goods (18a, 18b, 18c) is emptied together with the package or packages (90) from the basket (80).

11. Method according to one of Claims 1 to 10, **characterized in that** the bags (17, T, T1-T5, Ta, Tb) or baskets (80) are completely emptied in respect of the groups of goods (WG) contained.

12. Order-picking system (20, 30) for carrying out the method according to one of Claims 1 to 11, **characterized in that**
the order-picking system (20, 30) comprises bags and/or baskets and packages (90) for combining the goods into groups of goods, having at the input side a goods collection (22, 28) having the goods (18a-c) which are intended to be picked, having at least one adjacent filling device (19, 19a-c, 23, 33, 50) for the bags (17, T, T1-T5, Ta, Tb) and/or baskets (80), and
at the output side an emptying device (26, 60) for the bags (17, T, T1-T5, Ta, Tb) or baskets (80) which are filled with the groups of goods (WG), and **in that**
between the at least one filling device (19, 19a-c, 23, 33, 50) and the emptying device (26, 60) there is arranged a suspension conveyor (25, 42, 52, 59) for the bags (17, T, T1-T5, Ta, Tb) and/or baskets (80), which suspension conveyor (25, 42, 52, 59) connects the at least one filling device (19, 19a-c, 23, 33, 50) to the emptying device (26, 60), wherein the combining of the goods into groups of goods into a package (90), preferably a pouch or bag, is performed into the baskets (80) and/or bags (17, T, T1-T5, Ta, Tb) suspended from the suspension conveyor, wherein the package (90) in a first step before filling goods (18a, 18b, 18c) is arranged in a bag (17, T, T1-T5, Ta, Tb) or a basket (80) and is subsequently filled.

13. Order-picking system according to Claim 12, **characterized in that** the suspension conveyor (25, 42, 52, 59) connects the at least one filling device (19, 19a-c, 23, 33, 50) to the emptying device (26, 60) in a closed circuit, wherein the suspension conveyor (25, 42, 52) is preferably guided past a plurality of subsequent filling devices (19a-c).

14. Order-picking system according to Claim 12, **characterized in that** a common control system (24) is provided for controlling the filling device (19, 19a-c, 23, 33, 50), the emptying device (26, 60) and the suspension conveyor (25, 42, 52, 59).

15. Order-picking system according to Claim 14, **characterized in that** the common control system (24) is configured for assigning the goods (18a-c) of a group of goods (WG) to individual or a plurality of bags or baskets (80).

16. Order-picking system according to Claim 14 or 15, **characterized in that** the common control system (24) for transmitting order-picking data, in particular data of the groups of goods, is connected to an ERP system (21).

17. Order-picking system according to Claim 12, **characterized in that** the order-picking system (50) comprises at least one filling device (43, 44) which moves along the suspension conveyor (42), the latter being guided past below the former, and from conjointly moving filling compartments (45) fills goods (P) into the bags (T) or baskets (80) moving past therebelow.

18. Order-picking system according to Claim 12, **characterized in that** the emptying device (60) comprises a removal device (53) which pivots the filled bags (T) or baskets (80) suspended on the suspension conveyor (52) to an emptying position, and simultaneously receives the goods (P) arriving from the bags (T) or baskets (80) in the emptying position, and transports said goods (P) onwards.

19. Order-picking system according to one of Claims 12 to 18, **characterized in that** the package (90) is held in an open position by means of a holder in the basket (80).

## Revendications

1. Procédé de préparation de commandes de marchandises (18a-c), procédé dans lequel les marchandises individuelles (18a-c) sont prélevées d'une collection de marchandises (22, 28), rassemblées, conformément à des objectifs, en groupes de marchandises (WG) dans des sacs (17, T, T1-T5, Ta, Tb) ou des paniers (80) suspendus à un convoyeur aérien (42, 52, 59) et délivrées sous la forme de ces groupes de marchandises (WG) au traitement ultérieur, caractérisé en ce les marchandises sont versées dans un emballage (90) monté dans le sac (17, T, T1-T5, Ta, Tb) ou le panier (80), un groupe de marchandises (18a, 18b, 18c) étant versé dans un emballage (90) ou réparti sur plusieurs emballages (90), l'emballage (90) étant introduit dans un sac (17, T, T1-T5, Ta, Tb) ou un panier (80) dans une première étape, avant le versement des marchandises (18a, 18b, 18c), et ensuite rempli.

2. Procédé selon la revendication 1, **caractérisé en ce qu'**au moins un sac (17, T, T1-T5, Ta, Tb) propre ou un panier (80) propre est attribué à chaque groupe de marchandises (WG).

3. Procédé selon la revendication 1, **caractérisé en ce qu'**un groupe de marchandises (WG) composé de plusieurs marchandises est versé dans au moins un sac (17, T, T1-T5, Ta, Tb) ou dans au moins un panier (80).

4. Procédé selon la revendication 1, **caractérisé en ce que** les groupes de marchandises (WG) sont respectivement versés dans les sacs (17, T, T1-T5, Ta, Tb) ou les paniers (80) prévus à cet effet dans une opération de remplissage unique.

5. Procédé selon la revendication 1, **caractérisé en ce que** les marchandises (18a-c) qui font partie d'un groupe de marchandises (WG) sont versées dans les sacs (17, T, T1-T5, Ta, Tb) ou les paniers (80) prévus à cet effet en plusieurs opérations de remplissage successives en formant le groupe de marchandises (WG).

6. Procédé selon la revendication 5, **caractérisé en ce qu'**une opération de remplissage propre est effectuée pour chaque marchandise (18a-c) individuelle.

7. Procédé selon la revendication 5 ou 6, **caractérisé en ce que** le sac (17, T, T1-T5, Ta, Tb) ou le panier (80) sont amenés à passer les uns après les autres au niveau de différents dispositifs de versement (19a-c, 43, 44) en vue du remplissage.

8. Procédé selon l'une des revendications 1 à 7, **caractérisé en ce que** les sacs (17, T, T1-T5, Ta, Tb) ou les paniers (80), après le remplissage avec le groupe de marchandises (WG) prévu, sont tout d'abord entreposés temporairement avant que les groupes de marchandises (WG) qu'ils contiennent soient délivrés au traitement ultérieur.

9. Procédé selon l'une des revendications 1 à 8, **caractérisé en ce qu'**une pluralité d'emballages se trouvent dans le sac (17, T, T1-T5, Ta, Tb) ou le panier (80) et un emballage est ouvert dans une première étape, avant le versement des marchandises (18a, 18b, 18c), et ensuite rempli.

10. Procédé selon l'une des revendications 1 à 9, **caractérisé en ce que** le groupe de marchandises (WG) est vidé du panier (80) conjointement avec l'emballage ou les emballages (90).

11. Procédé selon l'une des revendications 1 à 10, **caractérisé en ce que** les sacs (17, T, T1-T5, Ta, Tb) ou les paniers (80) sont complètement vidés des groupes de marchandises (WG) qu'ils contiennent.

12. Installation de préparation de commandes (20, 30) destinée à mettre en œuvre le procédé selon l'une des revendications 1 à 11, **caractérisée en ce que** l'installation de préparation de commandes (20, 30) comporte des sacs et/ou des paniers ainsi que des emballages (90) servant à rassembler les marchandises en groupes de marchandises (WG), selon lequel
du côté de l'entrée, une collection de marchandises (22, 28) avec les marchandises (18a-c) à préparer pour commande, comprenant au moins un dispositif de versement (19, 19a-c, 23, 33, 50) rattaché à celle-ci pour les sacs (17, T, T1-T5, Ta, Tb) et/ou les paniers (80), ainsi que du côté de la sortie, un dispositif de vidage (26, 60) pour les sacs (17, T, T1-T5, Ta, Tb) ou les paniers (80) remplis avec les groupes de marchandises (WG), et **en ce que**
entre l'au moins un dispositif de versement (19, 19a-c, 23, 33, 50) et le dispositif de vidage (26, 60) est disposé un convoyeur aérien (25, 42, 52, 59) pour les sacs (17, T, T1-T5, Ta, Tb) et/ou les paniers (80), lequel convoyeur aérien (25, 42, 52, 59) relie l'au moins un dispositif de versement (19, 19a-c, 23, 33, 50) avec le dispositif de vidage (26, 60),
le rassemblement des marchandises en groupes de marchandises dans un emballage (90), de préférence un sachet ou une poche, s'effectuant dans les paniers (80) et/ou les sacs (17, T, T1-T5, Ta, Tb) suspendus au convoyeur aérien, l'emballage (90) étant introduit dans un sac (17, T, T1-T5, Ta, Tb) ou un panier (80) dans une première étape, avant le versement des marchandises (18a, 18b, 18c), et ensuite rempli.

13. Installation de préparation de commandes selon la revendication 12, **caractérisée en ce que** le convoyeur aérien (25, 42, 52, 59) relie l'au moins un dispositif de versement (19, 19a-c, 23, 33, 50) avec le dispositif de vidage (26, 60) en un circuit fermé, le convoyeur aérien (25, 42, 52) étant de préférence amené à passer au niveau de plusieurs dispositifs de versement (19a-c) disposés les uns derrière les autres.

14. Installation de préparation de commandes selon la revendication 12, **caractérisée en ce qu'**une commande commune (24) est présente pour la commande du dispositif de versement (19, 19a-c, 23, 33, 50), du dispositif de vidage (26, 60) et du convoyeur aérien (25, 42, 52, 59).

15. Installation de préparation de commandes selon la revendication 14, **caractérisée en ce que** la commande commune (24) est conçue pour l'affectation des marchandises (18a-c) d'un groupe de marchandises (WG) à des sacs ou des paniers (80) individuels ou multiples.

16. Installation de préparation de commandes selon la revendication 14 ou 15, **caractérisée en ce que** la commande commune (24) est raccordée à un système ERP (21) en vue de la communication de données de préparation de commandes, notamment de données des groupes de marchandises.

17. Installation de préparation de commandes selon la revendication 12, **caractérisée en ce que** l'installation de préparation de commandes (50) comporte au moins un dispositif de versement (43, 44), lequel se déplace le long du convoyeur aérien (42) qui est amené à passer sous celui-ci et verse, depuis des compartiments de versement (45) qui accompagnent son mouvement, les marchandises (P) dans les sacs (T) ou les paniers (80) passant sous celui-ci.

18. Installation de préparation de commandes selon la revendication 12, **caractérisée en ce que** le dispositif de vidage (60) comporte un dispositif de retrait (53) qui fait pivoter les sacs (T) ou les paniers (80) remplis, suspendus au convoyeur aérien (52), dans une position de vidage et, simultanément, recueille les marchandises (P) sortant des sacs (T) ou des paniers (80) dans la position de vidage et poursuit leur transport.

19. Installation de préparation de commandes selon l'une des revendications 12 à 18, **caractérisée en ce que** l'emballage (90) est maintenu dans une position ouverte au moyen d'un élément de maintien dans le panier (80).
